(19) Europäisches Patentamt / European Patent Office / Office européen des brevets

(11) **EP 3 118 776 B1**

(12) **EUROPEAN PATENT SPECIFICATION**

(45) Date of publication and mention of the grant of the patent:
**28.11.2018 Bulletin 2018/48**

(51) Int Cl.:
***G06K 17/00*** (2006.01)

(21) Application number: **15835462.1**

(22) Date of filing: **25.05.2015**

(86) International application number:
**PCT/CN2015/079692**

(87) International publication number:
**WO 2016/029721 (03.03.2016 Gazette 2016/09)**

(54) **SECURITY AUTHENTICATION METHOD FOR HIDING ULTRA HIGH FREQUENCY ELECTRONIC TAG IDENTIFIER**

SICHERHEITSAUTHENTIFIZIERUNGSVERFAHREN ZUM VERBERGEN EINES ELEKTRONISCHEN ULTRAHOCHFREQUENZETIKETTIDENTIFIKATORS

PROCÉDÉ D'AUTHENTIFICATION DE SÉCURITÉ POUR CACHER UN IDENTIFICATEUR D'ÉTIQUETTE ÉLECTRONIQUE À ULTRA-HAUTE FRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2014 CN 201410439094**

(43) Date of publication of application:
**18.01.2017 Bulletin 2017/03**

(73) Proprietor: **Traffic Management Research Institute Of the Ministry of Public Security
WuXi
Jiangsu 214151 (CN)**

(72) Inventors:
• **SUN, Zhengliang**
  **Wuxi**
  **Jiangsu 214151 (CN)**
• **HUANG, Jin**
  **Wuxi**
  **Jiangsu 214151 (CN)**
• **CAI, Gang**
  **Wuxi**
  **Jiangsu 214151 (CN)**
• **LIU, Dongbo**
  **Wuxi**
  **Jiangsu 214151 (CN)**
• **HU, Jiabin**
  **Wuxi**
  **Jiangsu 214151 (CN)**

(74) Representative: **Sun, Yiming et al
HUASUN Patent- und Rechtsanwälte
Friedrichstraße 33
80801 München (DE)**

(56) References cited:
**CN-A- 101 488 854      CN-A- 101 950 367
CN-A- 103 413 109      CN-A- 103 971 426
CN-A- 104 217 230**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to an authentication method, in particular, to a method for security authentication that hides an ultrahigh-frequency electronic tag identification number, and belongs to the technical field of ultrahigh-frequency radio frequency identification.

## BACKGROUND ART

Radio frequency identification (RFID) is a non-contact automatic identification technique based on wireless communications, and is one of the six basic techniques in the field of Internet of Things. The radio frequency identification technique can achieve automatic identification or read-write of object information without physical contact, and is widely applied to automatic identity identification and digital management of personnel, animals, objects, etc.

Passive ultrahigh-frequency radio frequency identification (UHF RFID) refers to a radio frequency identification system with operating frequencies of 840-845 MHz and 920-925 Mhz. A simple electronic tag recognition and read system consists of three portions, i.e., an electronic tag, a read-write device, and an antenna. The tag and the read-write device communicate by way of electromagnetic backscattering and coupling. The tag obtains energy required for operation through electromagnetic induction, without needing a battery.

UHF RFID wireless communication has broadcasting characteristics, and in particular, it has a long recognition and reading distance (5 m to 20 m). Therefore, it is vulnerable to attacks, such as counterfeiting, and replaying. Therefore, privacy protection and information security in application of the radio frequency identification system should be focused and considered. Currently, major air interface protocol standards for UHF RFID include ISO 18000-6C (6C standard for short) and a national standard GB/T29768 issued in 2013 in China. The 6C standard can only protect the data in the electronic tag user region by an access password, and the access password and the identification number (TID) of the electronic tag are transferred in the air in a cleartext form. Therefore, it is hard for the 6C standard to prevent the electronic tag from data reproduction and embezzling. Moreover, the national standard GB/T29768 uses a method for security authentication and a communication mechanism based on a symmetric cryptography algorithm and therefore, the security performance thereof has a great improvement as compared with the 6C standard. However, since during the security authentication process, the national standard GB/T 29768 uses the electronic tag identification number (TID) as the key dispersion parameter, which needs to return the TID in a cleartext form. Therefore, the national standard GB/T29768 still cannot perform read protect on the TID information. Moreover, in the field of vehicle related applications, TID is unique identification information of the vehicle identified by the electronic tag, and is core information for the vehicle related application. If the TID cannot be protected, an unauthorized read-write device can achieve vehicle trajectory tracking through recognizing and reading TID, and thus causing a severe potential security hazard.

Document CN 101 488 854 A discloses an authentication method in an RFID system. Accordingly an ID is divided into several parts in an anonymous method of tag ID; these parts are subjected to encryption and transmission.

Document CN 103 971 427 A discloses a PSAM safety control-based access control system and a safe access control method using the same. The system disclosed comprises an access control card reader including a radio frequency card reader unit and a PSAM safety management unit, an access control card for communicating with the card reader unit by radio frequency, and an access control device.

## SUMMARY

The present invention is aimed at overcoming defects in the prior art, and providing a method for security authentication that hides an ultrahigh-frequency electronic tag identification number, which can prevent an unauthorized read-write device from achieving vehicle trajectory tracking through obtaining an electronic tag identification number, and ensure mutual identity recognition and communications between the electronic tag and the read-write device.

According to the technical solution provided in the present invention, a method for security authentication that hides an ultrahigh-frequency electronic tag identification number, wherein the authentication method comprises the following steps:

a. sending, by a read-write device, authentication request information to an electronic tag; after receiving the authentication request information sent by the read-write device, reading, by the electronic tag, a batch key BKey from a security information region of the electronic tag and reading an electronic tag batch number TBN from an identification information region; performing, by the electronic tag, an encryption operation on the batch key BKey, the electronic tag batch number TBN, a random number RNt, and an electronic tag identification number TID, to obtain an encrypted tag identification number TID'; and returning, by the electronic tag, the encrypted tag identification number TID', the random number RNt and the electronic tag batch number TBN as responses to the read-write device;

b. receiving, by the read-write device, the encrypted tag identification number TID', the random number RNt and the electronic tag batch number TBN; performing encryption dispersion on the electronic tag batch number TBN by using an authentication root key RKey to obtain a read-write batch key BKey'; and performing a decryption operation on the encrypted tag identification number TID' and the random number RNt by using the read-write batch key BKey' to obtain a decrypted read-write tag identification number TID";

c. performing, by the read-write device, encryption dispersion on the decrypted read-write tag identification number TID by using the authentication root key RKey to obtain a read-write single tag authentication key TKey', and performing an encryption operation on the read-write single tag authentication keyTKey' and the random number RNr, to obtain read-write access control code $MAC_1$; and sending, by the read-write device, the read-write access control code $MAC_1$ to the electronic tag;

d. receiving, by the electronic tag, the read-write access control code $MAC_1$; performing a decryption operation by using a single tag keyTKey of the security information region to obtain a random number RNt'; comparing, by the electronic tag, the random number RNt' with the random number RNt, when the random number RNt' is inconsistent with the random number RNt, terminating an authentication process with the read-write device, otherwise, entering step (e);

e. generating, by the electronic tag, a random number RNt" again, and performing an encryption operation on the random number RNt" and the single tag authentication key TKey to obtain a tag access control code $MAC_2$, and sending the tag access control code $MAC_2$ to the read-write device; and

f. receiving, by the read-write device, the tag access control code $MAC_2$, and performing a decryption operation on the tag access control code $MAC_2$ by using the read-write single tag authentication key TKey' to obtain a random number RNr'; wherein if the random number RNr' is consistent with the random number RNr, the read-write device passes the authentication of the electronic tag; otherwise, the authentication fails.

In the step b, the authentication root key RKey is located in a security control module PSAM of the read-write device, and the security control module PSAM performs encryption dispersion on the electronic tag batch number TBN by using the authentication root key RKey to obtain the read-write batch key BKey'.

In the step a, the electronic tag performs an encryption operation on the electronic tag identification number TID, the random number RNt and the electronic tag batch key BKey, so that the electronic tag obtains the encrypted tag identification number TID', i.e.:

$$TID' = E1(TID \oplus RNt, BKey)$$

wherein E1 is a symmetric encryption operation function, and $\oplus$ is an XOR operation.

In the step b, the read-write device obtains the decrypted read-write tag identification number TID, i.e.:

$$TID = E2(TID', BKey) \oplus RNt$$

wherein E2 is a symmetric encryption operation function, and $\oplus$ is an XOR operation.

In the step c, the read-write device obtains the read-write access control code $MAC_1$, i.e.:

$$MAC_1 = E2(RNt \parallel RNr, TKey')$$

wherein E2 is a symmetric encryption operation function, and $\parallel$ represents an information cascade operation.

In the step d, the electronic tag obtains the random number RNt', i.e.:

$$\{RNt' \parallel RNr\} = E1(MAC_1, TKey)$$

wherein E1 is a symmetric encryption operation function, and $\parallel$ represents an information cascade operation.

In the step e, electronic tag obtains the tag read-write access control code $MAC_2$, i.e.:

$$MAC_2 = E1(RNt'' \parallel RNr, TKey)$$

wherein E1 is a symmetric encryption operation function, and $\parallel$ represents an information cascade operation.

In the step f, the read-write device obtains the random number RNr', i.e.:

$$\{RNt'' \parallel RNr\} = E2(MAC_2, TKey)$$

wherein E2 is a symmetric encryption operation function, and $\parallel$ represents an information cascade operation.

The present invention can provide better protection against potential security hazards and privacy issues existing in the radio frequency identification system. Especially in the vehicle-related field, such installation and authentication approach has more significant advantages. Specifically, said approach has the following advantages:

1. It has a function of protecting information about the electronic tag identification number TID. In the method for security authentication of the present invention, the information about the electronic tag identification number TID is returned after XOR encryption with the random number. Therefore, the returned value for the same electronic tag is different each time; in such a way, the unauthorized read-write device can be effectively prevented from tracking the tag by recording tag response information.

2. It realizes bidirectional identity authentication for a single key with a single tag. In the method for security authentication, each tag has a different identity authentication key. Even if the single tag key is obtained in an unauthorized manner, only the data of a single tag can be read, and the data stored in other electronic tags cannot be read, thereby effectively preventing the information stored in the tag from being stolen.

3. The method for security authentication is applicable to a vehicle related application field which requires high-speed and long-distance recognition and reading. In the authentication method, after the read-write device sends an authentication request, the electronic tag first returns ciphertext information including the electronic tag identification number TID. Therefore, even if the follow-up security authentication step fails, the read-write device can also obtain the electronic tag identification number TID of the electronic tag. In the vehicle related applications, the electronic tag identification number TID can uniquely correspond to a vehicle, and identity information registered for the vehicle can be obtained through searching by a background application system.

**BRIEF DESCRIPTION OF THE DRAWINGS**

FIG. 1 is a structural schematic diagram of a security authentication system for a passive ultrahigh-frequency radio frequency identification system of the present invention.

FIG. 2 is a schematic flow chart of a method for security authentication that hides an ultrahigh-frequency electronic tag identification number of the present invention.

**DETAILED DESCRIPTION OF THE INVENTION**

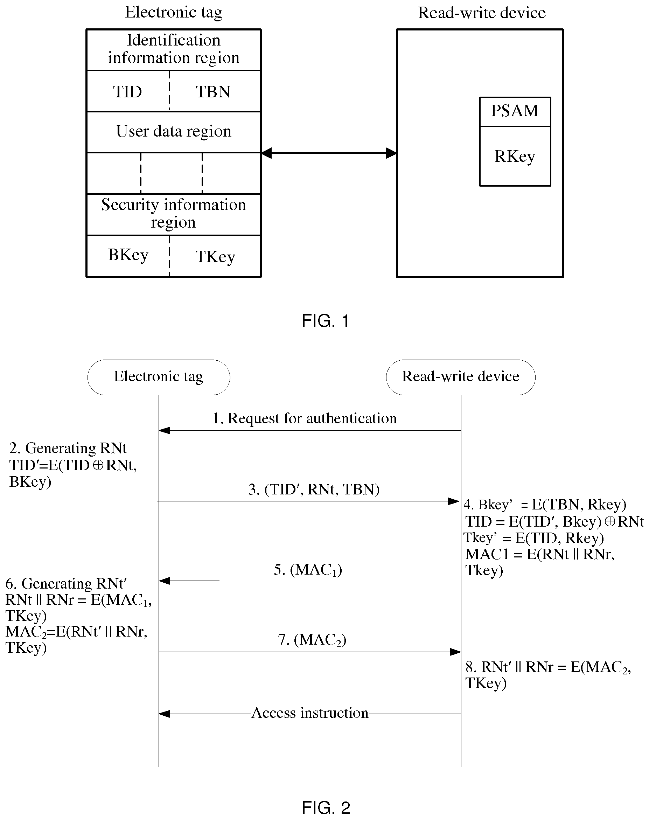

The present invention is further explained below in combination of specific drawings and embodiments.
As shown in FIG. 1 which is a structural schematic diagram of a security authentication system for a passive ultrahigh-frequency radio frequency identification system of the present invention, the system consists of an electronic tag and a read-write device.
The electronic tag includes three storage regions, i.e., an identification information region, a user data region, and a security information region. The identification information region stores information of an electronic tag identification number TID (a unique serial number) and an electronic tag batch number TBN. The electronic tag identification number TID is initially written by a tag chip manufacturing enterprise; regarding the electronic tag batch number TBN, the initial write of the electronic tag is completed by a key management center; the electronic tag identification number TID and the electronic tag batch number TBN cannot be changed after being written; the user data region stores personalized information of an identified object; the information is written in a personalized manner during actual use of the electronic tag; the security information region stores a batch key BKey and a single tag authentication key TKey; the batch key BKey and the single tag authentication key TKey are generated by performing encryption dispersion on the electronic tag batch number TBN and the electronic tag identification number TID by an authentication root key RKey, and are written synchronously with information about the electronic tag batch number TBN.
A security control module PSAM built in the read-write device stores information about the authentication root key RKey; the information is written by an authorized administrative authority.
In order to prevent an unauthorized read-write device from achieving vehicle trajectory tracking through obtaining an electronic tag identification number, and ensure mutual identity recognition and communications between the electronic tag and the read-write device, the authentication method in the present invention comprises the following steps:

a. A read-write device sends authentication request information to an electronic tag; after receiving the authentication request information sent by the read-write device, the electronic tag reads a batch key BKey from a security information region of the electronic tag and reads an electronic tag batch number TBN from an identification information region; the electronic tag performs an encryption operation on the batch key BKey, the electronic tag batch number TBN, a random number RNt, and an electronic tag identification number TID, to obtain an encrypted tag identification number TID'; and the electronic tag returns the encrypted tag identification number TID', the random number RNt and the electronic tag batch number TBN as responses to the read-write device. Specifically, the electronic tag performs an encryption operation on the electronic tag identification number TID, the random number RNt and the electronic tag batch key BKey, so that the electronic tag obtains the encrypted tag identification number TID', i.e.:

$$TID' = E1(TID \oplus RNt, BKey)$$

where E1 is a symmetric encryption operation function, $\oplus$ is an XOR operation, and the random number RNt is a numeral value randomly generated in the electronic tag.

b. The read-write device receives the encrypted tag identification number TID', the random number RNt and the electronic tag batch number TBN, performs encryption dispersion on the electronic tag batch number TBN by using an authentication root key RKey to obtain a read-write batch key BKey', and performs a decryption operation on the encrypted tag identification number TID' and the random number RNt by using the read-write batch key BKey' to obtain a decrypted read-write tag identification number TID.

The authentication root key RKey is located in a security control module PSAM of the read-write device; the security control module PSAM performs encryption dispersion on the electronic tag batch number TBN by using the authentication root key RKey, to obtain the read-write batch key BKey'. The computational formula is as follows:

$$BKey' = ED(TBN, RKey)$$

where ED is an encryption dispersion operation function.

In the step b, the read-write device obtains the decrypted read-write tag identification number TID, i.e.:

$$TID = E2(TID', BKey) \oplus RNt$$

where E2 is a symmetric encryption operation function, and $\oplus$ is an XOR operation.

During specific implementation, for a legally authorized read-write device, the encryption function E1 in the electronic tag and the encryption function E2 in the read-write device are preset encryption types. The encrypted tag identification number TID' obtained through encryption of the electronic tag can be decrypted in the read-write device to obtain the decrypted read-write tag identification number TID". The specific implementation process is well known to persons skilled in the art. When the read-write device is a legal device, the obtained read-write batch key BKey' is consistent with the batch key BKey in the electronic tag. When the read-write device is an unauthorized read-write device, the obtained read-write batch key BKey' is inconsistent with the batch key BKey in the electronic tag. Therefore, the obtained decrypted read-write tag identification number TID" is not a preset result.

c. The read-write device performs encryption dispersion on the decrypted read-write tag identification number TID by using the authentication root key RKey to obtain a read-write single tag authentication key TKey', and performs an encryption operation on the read-write single tag authentication key TKey' and the random number RNr to obtain a read-write access control code MAC$_1$; and the read-write device sends the read-write access control code MAC$_1$ to the electronic tag.

In the step c, the read-write device obtains the read-write access control code MAC$_1$, i.e.:

$$MAC_1 = E2(RNt \parallel RNr, TKey')$$

where E2 is a symmetric encryption operation function, and $\parallel$ represents an information cascade operation.

d. The electronic tag receives the read-write access control code MAC$_1$, performs a decryption operation by using a single tag key TKey of the security information region to obtain a random number RNt'; the electronic tag compares the random number RNt' with the random number RNt, when the random number RNt' is inconsistent with the random number RNt, terminates an authentication process with the read-write device, otherwise, enters step e.

The electronic tag obtains the random number RNt', i.e.:

$$\{RNt' \parallel RNr\} = E1(MAC_1, TKey)$$

where E1 is a symmetric encryption operation function, and $\parallel$ represents an information cascade operation.

e. The electronic tag generates a random number RNt" again, performs an encryption operation on the random number RNt" and the single tag authentication keyTKey to obtain a tag access control code MAC$_2$, and sends the tag access control code MAC$_2$ to the read-write device.

The electronic tag obtains the tag read-write access control code MAC$_2$, i.e.:

$$MAC_2 = E1(RNt'' \parallel RNr, TKey)$$

where E1 is a symmetric encryption operation function, and $\parallel$ represents an information cascade operation.

f. The read-write device receives the tag access control code MAC$_2$, and performs a decryption operation on the tag access control code MAC$_2$ by using the read-write single tag authentication key TKey' to obtain a random number RNr'; when the random number RNr' is consistent with the random number RNr, the read-write device passes the authentication of the electronic tag; otherwise, the authentication fails.

The read-write device obtains the random number RNr', i.e.:

$$\{RNt'' \parallel RNr\} = E2(MAC_2, TKey)$$

where E2 is a symmetric encryption operation function, $\parallel$ represents an information cascade operation.

In the specific embodiments of the present invention, in the steps a-f, the encryption algorithms for the symmetric encryption operation functions E1 and E2 adopt the national cryptographic algorithm SM7, and the encryption algorithm for the encryption dispersion function ED adopts the SM1 algorithm. However, the symmetric encryption algorithms described in the specific embodiments of the present invention are not limited just to the SM7 algorithm, but can also adopt symmetric encryption algorithms such as SM4, DES, and 3DES.

In the present invention, by performing random number encryption on an electronic tag identification number TID and then returning same in the form of ciphertext, an unauthorized read-write device can be effectively prevented from obtaining electronic tag identification number TID information and performing unauthorized tracking and identity recognition of an object identified by an electronic tag. Meanwhile, the authentication method can effectively resist attacks such as eavesdropping, counterfeiting and replaying, and has advantages of preventing electronic tag information from being stolen, and preventing tag forgery, etc. The method for security authentication uses a national cryptographic symmetric encryption algorithm and adopts a double-key and secondary authentication mechanism, thereby achieving validity verification of an electronic tag for the same key for batch cards and bidirectional security verification of a single key with a single tag.

**Claims**

1. A method for security authentication that hides an ultrahigh-frequency electronic tag identification number, wherein the authentication method comprises the following steps:

(a) sending, by a read-write device, authentication request information to an electronic tag; after receiving the authentication request information sent by the read-write device, reading, by the electronic tag, a batch key BKey from a security information region of the electronic tag and reading an electronic tag batch number TBN from an identification information region; performing, by the electronic tag, an encryption operation on the batch key BKey, the electronic tag batch number TBN, a random number RNt generated by the electronic tag, and an electronic tag identification number TID, to obtain an encrypted tag identification number TID'; and returning, by the electronic tag, the encrypted tag identification number TID', the random number RNt and the electronic tag batch number TBN as a response to the read-write device;

(b) receiving, by the read-write device, the encrypted tag identification number TID', the random number RNt and the electronic tag batch number TBN, performing encryption dispersion on the electronic tag batch number TBN by using an authentication root key RKey to obtain a read-write batch key BKey'; and performing a decryption operation on the encrypted tag identification number TID' and the random number RNt by using the read-write batch key BKey' to obtain a decrypted read-write tag identification number TID";

(c) performing, by the read-write device, encryption dispersion on the decrypted read-write tag identification number TID" by using the authentication root key RKey to obtain a read-write single tag authentication key TKey', and performing an encryption operation on the read-write single tag authentication key TKey' and a random number RNr generated by the read-write device to obtain a read-write access control code $MAC_1$; and sending, by the read-write device, the read-write access control code $MAC_1$ to the electronic tag;

(d) receiving, by the electronic tag, the read-write access control code $MAC_1$; performing a decryption operation on the read-write access control code $MAC_1$ by using a single tag key TKey of the security information region to obtain a random number RNt'; comparing, by the electronic tag, the random number RNt' with the random number RNt, when the random number RNt' is inconsistent with the random number RNt, terminating an authentication process with the read-write device; otherwise, entering step (e);

(e) generating, by the electronic tag, a random number RNt'' again, and performing an encryption operation on the random number RNt'' and the single tag authentication key TKey to obtain a tag access control code $MAC_2$, and sending the tag access control code $MAC_2$ to the read-write device; and

(f) receiving, by the read-write device, the tag access control code $MAC_2$, and performing a decryption operation on the tag access control code $MAC_2$ by using the read-write single tag authentication key TKey' to obtain a random number RNr'; wherein if the random number RNr' is consistent with the random number RNr, the read-write device passes the authentication of the electronic tag; otherwise, the authentication fails.

2. The method for security authentication that hides an ultrahigh-frequency electronic tag identification number according to claim 1, wherein: in the step (b), the authentication root key RKey is located in a security control module PSAM of the read-write device; the security control module PSAM performs encryption dispersion on the electronic tag batch number TBN by using the authentication root key RKey to obtain the read-write batch key BKey'.

3. The method for security authentication that hides an ultrahigh-frequency electronic tag identification number according to claim 1, wherein: in the step (a), the electronic tag performs an encryption operation on the electronic tag identification number TID, the random number RNt and the electronic tag batch key BKey, so that the electronic tag obtains the encrypted tag identification number TID', i.e.:

$$TID' = E1(TID \oplus RNt, BKey)$$

wherein E1 is a symmetric encryption operation function, and $\oplus$ is an XOR operation.

4. The method for security authentication that hides an ultrahigh-frequency electronic tag identification number according to claim 1, wherein: in the step (b), the read-write device obtains the decrypted read-write tag identification number TID, i.e.:

$$TID = E2(TID', BKey) \oplus RNt$$

wherein E2 is a symmetric encryption operation function, and $\oplus$ is an XOR operation.

5. The method for security authentication that hides an ultrahigh-frequency electronic tag identification number according to claim 1, wherein: in the step (c), the read-write device obtains the read-write access control code $MAC_1$, i.e.:

$$MAC_1 = E2(RNt \parallel RNr, TKey')$$

wherein E2 is a symmetric encryption operation function, and $\parallel$ represents an information cascade operation.

6. The method for security authentication that hides an ultrahigh-frequency electronic tag identification number according to claim 1, wherein: in the step (d), the electronic tag obtains the random number RNt', i.e.,:

$$\{RNt' \parallel RNr\} = E1(MAC_1, TKey)$$

wherein E1 is a symmetric encryption operation function, and $\parallel$ represents an information cascade operation.

7. The method for security authentication that hides an ultrahigh-frequency electronic tag identification number according to claim 1, wherein: in the step (e), electronic tag obtains the tag read-write access control code $MAC_2$, i.e.:

$$MAC_2 = E1(RNt'' \parallel RNr, TKey)$$

wherein E1 is a symmetric encryption operation function, and $\parallel$ represents an information cascade operation.

8. The method for security authentication that hides an ultrahigh-frequency electronic tag identification number according to claim 1, wherein: in the step (f), the read-write device obtains the random number RNr', i.e.:

$$\{RNt'' \parallel RNr\} = E2(MAC_2, TKey)$$

wherein E2 is a symmetric encryption operation function, and $\parallel$ represents an information cascade operation.

**Patentansprüche**

1. Verfahren zur Sicherheitsauthentifizierung, das eine Ultrahochfrequenz-Elektroniktag-Kennzahl verbirgt, wobei das Authentifizierungsverfahren die folgenden Schritte umfasst:

(a) Senden von Authentifizierungsanfrageinformationen durch eine Lese-Schreib-Vorrichtung an einen elektronischen Tag; nach Empfang der Authentifizierungsanfrageinformationen, die durch die Lese-Schreib-Vorrichtung gesendet wurden, Lesen eines Batch-Schlüssels BKey durch den elektronischen Tag aus einer Sicherheitsinformationsregion des elektronischen Tags und Lesen einer elektronischen Tagbatchzahl TBN aus einer Kennungsinformationsregion; Durchführung einer Verschlüsselungsaktion durch den elektronischen Tag auf den Batchschlüssel BKey, die elektronische Tagbatchzahl TBN, eine Zufallszahl RNt, die durch den elektronischen Tag erzeugt wurde, und eine elektronische Tagkennzahl TID, um eine verschlüsselte Tagkennzahl TID' zu erhalten; und Zurückgeben der verschlüsselten Tagkennzahl TID', der Zufallszahl RNt und der elektronischen Tagbatchzahl TBN durch den elektronischen Tag in Reaktion an die Lese-Schreib-Vorrichtung;

(b) Empfang der verschlüsselten Tagkennzahl TID', der Zufallszahl RNt und der elektronischen Tagbatchzahl TBN durch die Lese-Schreib-Vorrichtung, Durchführung der Verschlüsselungsdispersion auf die elektronische Tagbatchzahl TBN unter Verwendung eines Authentifizierungsrootschlüssels RKey zum Erhalten eines Lese-Schreib-Batchschlüssels BKey'; und Durchführung einer Entschlüsselungsaktion auf die verschlüsselte Tagkennzahl TID' und die Zufallszahl RNt durch Verwendung des Lese-Schreib-Batchschlüssels BKey' zum Erhalten einer entschlüsselten Lese-Schreib-Tagkennzahl TID";

(c) Durchführung der Verschlüsselungsdispersion durch die Lese-Schreib-Vorrichtung auf die entschlüsselte Lese-Schreib-Tagkennzahl TID" durch Verwendung des Authentifizierungsrootschlüssels RKey zum Erhalt eines einzelnen Lese-Schreib-Tagauthentifizierungsschlüssels TKey' und Durchführung einer Verschlüsselungsaktion auf den einzelnen Lese-Schreib-Tagauthentifizierungsschlüssel TKey' und eine Zufallszahl RNr, die durch die Lese-Schreib-Vorrichtung erzeugt wurde, um einen Lese-Schreib-Zugangskontrollcode MAC$_1$ zu erhalten; und Senden des Lese-Schreib-Zugangskontrollcodes MAC$_1$ durch die Lese-Schreib-Vorrichtung an den elektronischen Tag;

(d) Empfang des Lese-Schreib-Zugangskontrollcodes MAC$_1$ durch den elektronischen Tag; Durchführung einer Entschlüsselungsaktion auf den Lese-Schreib-Zugangskontrollcode MAC$_1$ unter Verwendung eines einzelnen Tagschlüssels TKey der Sicherheitsinformationsregion zum Erhalten einer Zufallszahl RNt'; Vergleichen der Zufallszahl RNt' mit der Zufallszahl RNt durch den elektronischen Tag; wenn die Zufallszahl RNt' nicht der Zufallszahl RNt entspricht, Abbrechen eines Authentifizierungsprozesses mit der Lese-Schreib-Vorrichtung; andernfalls Eintritt in Schritt (e);

(e) Erneute Erzeugung einer Zufallszahl RNt" durch den elektronischen Tag und Durchführung einer Verschlüsselungsaktion auf die Zufallszahl RNt" und den einzelnen Tagauthentifizierungsschlüssel TKey zum Erhalt eines Tagzugangskontrollcodes MAC$_2$ und Senden des Tagzugangskontrollcodes MAC$_2$ an die Lese-Schreib-Vorrichtung; und

(f) Empfang des Tagzugangskontrollcodes MAC$_2$ durch die Lese-Schreib-Vorrichtung und Durchführung einer Entschlüsselungsaktion auf den Tagzugangskontrollcode MAC$_2$ durch Verwendung des einzelnen Lese-Schreib-Tagauthentifizierungsschlüssels TKey' zum Erhalt einer Zufallszahl RNr'; wobei, wenn die Zufallszahl RNr' der Zufallszahl RNr entspricht, die Lese-Schreib-Vorrichtung die Authentifizierung des elektronischen Tags besteht; andernfalls schlägt die Authentifizierung fehlt.

2.  Verfahren zur Sicherheitsauthentifizierung, das eine Ultrahochfrequenz-Elektroniktag-Kennzahl nach Anspruch 1 verbirgt, wobei: sich der Authentifizierungsrootschlüssel RKey in Schritt (b) in einem Sicherheitskontrollmodul PSAM der Lese-Schreib-Vorrichtung befindet; das Sicherheitskontrollmodul PSAM durch Verwendung des Authentifizierungsrootschlüssels RKey die Verschlüsselungsdispersion auf die elektronische Tagbatchzahl TBN durchführt, um den Lese-Schreib-Batchschlüssel BKey' zu erhalten.

3.  Verfahren zur Sicherheitsauthentifizierung, das eine Ultrahochfrequenz-Elektroniktag-Kennzahl nach Anspruch 1 verbirgt, wobei: der elektronische Tag in Schritt (a) eine Verschlüsselungsaktion auf die elektronische Tagkennzahl TID, die Zufallszahl RNt und den elektronischen Tagbatchschlüssel BKey durchführt, sodass der elektronische Tag die verschlüsselte Tagkennzahl TID' erhält, d. h.:

$$TID' = E1(TID \oplus RNt, BKey)$$

wobei E1 eine symmetrische Verschlüsselungsaktion ist und $\oplus$ eine XOR-Aktion ist.

4.  Verfahren zur Sicherheitsauthentifizierung, das eine Ultrahochfrequenz-Elektroniktag-Kennzahl verbirgt, nach Anspruch 1, wobei: die Lese-Schreib-Vorrichtung in Schritt (b) die entschlüsselte Lese-Schreib-Tagkennzahl TID, erhält, d. h.:

$$TID = E2(TID', BKey) \oplus RNt$$

wobei E2 eine symmetrische Verschlüsselungsaktion ist und $\oplus$ eine XOR-Aktion ist.

5.  Verfahren zur Sicherheitsauthentifizierung, das eine Ultrahochfrequenz-Elektroniktag-Kennzahl verbirgt, nach Anspruch 1, wobei: die Lese-Schreib-Vorrichtung in Schritt (c) den Lese-Schreib-Zugangskontrollcode $MAC_1$ erhält, d.h.:

$$MAC_1 = E2(RNt \parallel RNr, TKey')$$

wobei E2 eine symmetrische Verschlüsselungsaktion ist und $\parallel$ eine Informationskaskadenaktion darstellt.

6. Verfahren zur Sicherheitsauthentifizierung, das eine Ultrahochfrequenz-Elektroniktag-Kennzahl verbirgt, nach Anspruch 1, wobei: der elektronische Tag in Schritt (d)die Zufallszahl RNt' erhält, d. h.:

$$\{RNt' \parallel RNr\} = E1(MAC_1, TKey)$$

wobei E1 eine symmetrische Verschlüsselungsaktion ist und $\parallel$ eine Informationskaskade darstellt.

7. Verfahren zur Sicherheitsauthentifizierung, das eine Ultrahochfrequenz-Elektroniktag-Kennzahl verbirgt, nach Anspruch 1, wobei: der elektronische Tag in Schritt (e)den Tag-Lese-Schreib-Zugangskontrollcode $MAC_2$ erhält, d.h.:

$$MAC_2 = E1(RNt'' \parallel RNr, TKey)$$

wobei E1 eine symmetrische Verschlüsselungsaktion ist und $\parallel$ eine Informationskaskadenaktion darstellt.

8. Verfahren zur Sicherheitsauthentifizierung, das eine Ultrahochfrequenz-Elektroniktag-Kennzahl verbirgt, nach Anspruch 1, wobei: in Schritt (d) die Lese-Schreib-Vorrichtung die Zufallszahl RNr' erhält, d. h.:

$$\{RNt'' \parallel RNr\} = E2(MAC_2, TKey)$$

wobei E2 eine symmetrische Verschlüsselungsaktion ist und $\parallel$ eine Informationskaskadenaktion darstellt.

**Revendications**

1. Procédé d'authentification sécurisée qui masque un numéro d'identification d'étiquette électronique à ultra-haute fréquence, le procédé d'authentification comprenant les étapes suivantes :

(a) envoyer, par le biais d'un dispositif de lecture-écriture, des informations de demande d'authentification à une étiquette électronique ;

après avoir reçu les informations de demande d'authentification envoyées par le dispositif de lecture-écriture, lire, par le biais de l'étiquette électronique, une clé de lot BKey provenant d'une région d'informations de sécurité de l'étiquette électronique et lire un numéro de lot d'étiquette électronique TBN provenant d'une région d'informations d'identification ; effectuer, par le biais de l'étiquette électronique, une opération de cryptage sur la clé de lot BKey, le numéro de lot d'étiquette électronique TBN, un nombre aléatoire RNt généré par l'étiquette électronique, et un numéro d'identification d'étiquette électronique TID, pour obtenir un numéro d'identification d'étiquette crypté TID' ; et renvoyer, par le biais de l'étiquette électronique, le numéro d'identification d'étiquette crypté TID', le numéro aléatoire RNt et le numéro de lot d'étiquette électronique TBN en réponse au dispositif de lecture-écriture ;

(b) recevoir, par le biais du dispositif de lecture-écriture, le numéro d'identification d'étiquette crypté TID', le numéro aléatoire RNt et le numéro de lot d'étiquette électronique TBN, en effectuant une dispersion de cryptage sur le numéro de lot d'étiquette électronique TBN en utilisant une clé racine d'authentification RKey pour obtenir une clé de lot BKey' en lecture-écriture ; et effectuer une opération de décryptage sur le numéro d'identification d'étiquette chiffré TID' et le nombre aléatoire RNt en utilisant la clé de lot BKey' en lecture-écriture pour obtenir un numéro d'identification d'étiquette décrypté en lecture-écriture TID'' ;

(c) effectuer, par le biais du dispositif de lecture-écriture, une dispersion de cryptage sur le numéro d'identification d'étiquette décrypté en lecture-écriture TID'' en utilisant la clé racine d'authentification RKey pour obtenir une clé d'authentification à étiquette unique en lecture-écriture TKey' et effectuer une opération de cryptage sur la clé d'authentification à étiquette unique en lecture-écriture TKey' et un nombre aléatoire RNr généré par le dispositif de lecture-écriture pour obtenir un code de contrôle d'accès en lecture-écriture $MAC_1$ ; et envoyer par le biais du dispositif de lecture-écriture, le code de contrôle d'accès en lecture $MAC_1$ à l'étiquette électronique ;

(d) recevoir, par le biais de l'étiquette électronique, le code de contrôle d'accès en lecture-écriture $MAC_1$ ; effectuer une opération de décryptage sur le code de contrôle d'accès en lecture-écriture $MAC_1$ en utilisant une clé à étiquette unique TKey de la région d'informations de sécurité pour obtenir un nombre aléatoire RNt' ; comparer, par le biais de l'étiquette électronique, le nombre aléatoire RNt' au nombre aléatoire RNt, lorsque le nombre aléatoire RNt' est incohérent avec le nombre aléatoire RNt, mettre fin à un processus d'authentification avec le dispositif de lecture-écriture ; sinon, passer à l'étape (e) ;

(e) générer de nouveau, par le biais de l'étiquette électronique, un nombre aléatoire RNt" et effectuer une opération de cryptage sur le nombre aléatoire RNt" et la clé d'authentification à étiquette unique TKey pour obtenir un code de contrôle d'accès d'étiquette $MAC_2$ et envoyer le contrôle d'accès d'étiquette code $MAC_2$ vers le dispositif de lecture-écriture ; et

(f) recevoir, par le biais du dispositif de lecture-écriture, le code de contrôle d'accès d'étiquette $MAC_2$ et effectuer une opération de décryptage sur le code de contrôle d'accès d'étiquette $MAC_2$ en utilisant la clé d'authentification à étiquette unique TKey' pour obtenir un nombre aléatoire RNr' ; dans lequel, si le nombre aléatoire RNr' est cohérent avec le nombre aléatoire RNr, le dispositif de lecture-écriture approuve l'authentification de l'étiquette électronique ; sinon, l'authentification échoue.

2. Procédé d'authentification sécurisée qui masque un numéro d'identification d'étiquette électronique à ultra-haute fréquence selon la revendication 1, dans lequel : à l'étape (b), la clé racine d'authentification RKey est située dans un module de contrôle de sécurité PSAM du dispositif de lecture-écriture ; le module de contrôle de sécurité PSAM effectue une dispersion de cryptage sur le numéro de lot d'étiquette électronique TBN en utilisant la clé racine d'authentification RKey pour obtenir la clé de lot en lecture-écriture BKey'.

3. Procédé d'authentification sécurisée qui masque un numéro d'identification d'étiquette électronique à ultra-haute fréquence selon la revendication 1, dans lequel : à l'étape (a), l'étiquette électronique effectue une opération de cryptage sur le numéro d'identification d'étiquette électronique TID, le numéro aléatoire RNt et la clé de lot d'étiquette électronique BKey, de sorte que l'étiquette électronique obtienne le numéro d'identification d'étiquette crypté TID', à savoir :

$$TID' = E1(TID \oplus RNt, BKey)$$

où E1 est une fonction d'opération de cryptage symétrique et $\oplus$ est une opération XOR.

4. Procédé d'authentification sécurisée qui masque un numéro d'identification d'étiquette électronique à ultra-haute fréquence selon la revendication 1, dans lequel : à l'étape (b), le dispositif de lecture-écriture obtient le numéro d'identification d'étiquette électronique décrypté en lecture-écriture TID, à savoir :

$$TID = E2(TID', BKey) \oplus RNt$$

où E2 est une fonction d'opération de cryptage symétrique et $\oplus$ est une opération XOR.

5. Procédé d'authentification sécurisée qui masque un numéro d'identification d'étiquette électronique à ultra-haute fréquence selon la revendication 1, dans lequel : à l'étape (c), le dispositif de lecture-écriture obtient le code de contrôle d'accès en lecture-écriture $MAC_1$, à savoir :

$$MAC_1 = E2(RNt \| RNr, TKey')$$

où E2 est une fonction d'opération de cryptage symétrique et $\|$ représente une opération de cascade d'informations.

6. Procédé d'authentification sécurisée qui masque un numéro d'identification d'étiquette électronique à ultra-haute fréquence selon la revendication 1, dans lequel : à l'étape (d), l'étiquette électronique obtient le numéro aléatoire RNt', à savoir :

$$\{RNt' \| RNr\} = E1(MAC_1, TKey)$$

où E1 est une fonction d'opération de cryptage symétrique et $\|$ représente une opération de cascade d'informations.

7. Procédé d'authentification sécurisée qui masque un numéro d'identification d'étiquette électronique à ultra-haute fréquence selon la revendication 1, dans lequel : à l'étape (e), l'étiquette électronique obtient le code de contrôle d'accès en lecture-écriture $MAC_2$, à savoir :

$$MAC_2 = E1(RNt'' \| RNr, TKey)$$

où E1 est une fonction d'opération de cryptage symétrique et $\|$ représente une opération de cascade d'informations.

8. Procédé d'authentification sécurisée qui masque un numéro d'identification d'étiquette électronique à ultra-haute fréquence selon la revendication 1, dans lequel : à l'étape (f), l'étiquette électronique obtient le numéro aléatoire RNr', à savoir :

$$\{RNt'' \parallel RNr\} = E2(MAC_2, TKey)$$

où E2 est une fonction d'opération de cryptage symétrique et $\parallel$ représente une opération de cascade d'informations.

$$\{RNt'' \parallel RNr\} = E2(MAC_2, TKey)$$

Electronic tag                          Read-write device

| Identification information region | |
| --- | --- |
| TID | TBN |
| User data region | |
| | |
| Security information region | |
| BKey | TKey |

PSAM

RKey

**FIG. 1**

Electronic tag                        Read-write device

1. Request for authentication

2. Generating RNt
$TID'=E(TID \oplus RNt, BKey)$

3. (TID', RNt, TBN)

4. Bkey' = E(TBN, Rkey)
TID = E(TID', Bkey) $\oplus$ RNt
Tkey' = E(TID, Rkey)
MAC1 = E(RNt ‖ RNr, Tkey)

5. (MAC$_1$)

6. Generating RNt'
RNt ‖ RNr = E(MAC$_1$, TKey)
MAC$_2$=E(RNt' ‖ RNr, TKey)

7. (MAC$_2$)

8. RNt' ‖ RNr = E(MAC$_2$, TKey)

Access instruction

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101488854 A
- CN 103971427 A